# EUROPEAN PATENT APPLICATION

(11) **EP 1 681 499 A1**
(43) Date of publication of application: **19.07.2006**
(21) Application number: 04818186.1
(22) Date of filing: 05.11.2004
(51) Int. Cl.: F16J 15/44

(54) **SEALING DEVICE**

(30) Priority: 05.11.2003 JP 2003375379
(71) Applicant: Arai Seisakusho Co., Ltd, Tokyo, 124-8566 (JP)
(72) Inventor: SODA, Masaki Arai Seisakusho Co., Ltd., Katsushika-ku, Tokyo 124-8566 (JP); ISHIKAWA, Tetsuya Arai Seisakusho Co., Ltd., Katsushika-ku, Tokyo 124-8566 (JP); MARUYAMA, Shigeru Arai Seisakusho Co., Ltd., Katsushika-ku, Tokyo 124-8566 (JP); NAGANO, Roichi Arai Seisakusho Co., Ltd., Katsushika-ku, Tokyo 124-8566 (JP)
(74) Representative: Henderson, Wendy Agnes
(86) International application number: PCT/JP2004/016393
(87) International publication number: WO 2005/045286

(57) **Abstract**

[SUBJECT] The present invention provides a sealing device capable of preventing the leakage of a sealed fluid over a wider range of from a lower speed to a higher speed without narrowing of a seal gap.

[MEANS FOR SOLVING THE SUBJECT] A seal gap 25 is provided between a rotor 3 and a stator 5, and a movable floating ring 6 is disposed in the seal gap 25. The floating ring 6 is formed so that if its thickness T is defined as 1, its length in a widthwise direction perpendicular to a thickness-wise direction is defined as equal to or larger than 3.

## Description

### TECHNICAL FIELD

The present invention relates to a sealing device suitable for preventing the leakage of a sealed fluid in a non-contact manner under the rotation of a rotor.

### BACKGROUND ART

A lip seal represented by an oil seal is conventionally used in many cases as one type of a sealing device for preventing the leakage of a sealed fluid. The lip seal suffers from a problem that a friction with a rotating shaft is generated due to the contact of a lip with the rotating shaft, resulting in a loss in rotational torque of the rotating shaft and in a degradation in sealing function with time due to the wearing of a contact portion.

Known as a sealing device for preventing the leakage of a sealed fluid in an area requiring a lower torque is a labyrinth seal in which a seal gap is provided between a rotor and a stator, so that an amount of sealed fluid leaked can be suppressed to an acceptable limit or less in a non-contact manner under the rotation of the rotor. This labyrinth seal is suitable for preventing the leakage of the sealed fluid, particularly in an area requiring a lower torque, and is used, for example, in a turbocharger (for example, see Patent Document 1).

A floating ring seal including a movable floating ring is also known as a sealing device capable of suppressing the amount of sealed fluid leaked to an acceptable limit or less (for example, see Patent Document 2).

The labyrinth seal and the floating ring seal are adapted to suppress the amount of sealed fluid leaked to the acceptable limit or less in the non-contact manner, and are incapable of reliably preventing the leakage of the sealed fluid.

Patent Document 1: Japanese Patent Application Laid-open No.H5-1559
Patent Document 2: Japanese Patent No.2583194

### DISCLOSURE OF THE INVENTION

### SUBJECT TO BE SOLVED BY THE INVENTION

In the above-described conventional sealing device, for example, the labyrinth seal, in order to decrease the amount of sealed fluid leaked during the rotation of the rotor to a level as small as substantially negligible, it is necessary to narrow the seal gap provided between the rotor and the stator and to diminish the dispersion, i.e., to precisely manage the seal gap. In addition, in order to decrease the amount of sealed fluid leaked during the rotation of the rotor to a level as small as substantially negligible, it is necessary to more narrow the seal gap, as the rotating speed becomes higher. For example, when the rotating speed of the rotor is 8000 rpm, it is necessary to form the seal gap provided between the rotor and stator at a size as small as 0.1 mm.

However, in order to form the seal gap having a size of 0.1 mm in the conventional labyrinth seal, it is necessary to extremely increase the accuracy of processing of the labyrinth seal and the accuracy of mounting of the labyrinth seal. To increase the accuracy of processing of the labyrinth seal, a device of a high accuracy is required, and to produce the labyrinth seals in bulk by such a device, extremely large numbers of devices and places are required, resulting in problems of a reduction in production efficiency and an increase in economical burden. Further, to increase the accuracy of mounting of the labyrinth seal, a mounting device of a high accuracy is likewise required, also resulting in problems of a reduction in production efficiency and an increase in economical burden. There is a further problem that even if the seal gap is formed at a size as small as 0.1 mm, it is impossible to reliably prevent the leakage of the sealed fluid during the rotation of the rotor.

Therefore, a sealing device is desired which is capable of reliably preventing the leakage of a sealed fluid over a wider range of from a lower speed to a higher speed without narrowing of a seal gap.

The conventional labyrinth seal is utilized in a turbocharger in which a seal gap having a higher accuracy and a size on the order of 0.1 mm and a higher mounting accuracy are required, and suffers from a problem that its arrangement cannot be utilized in a sealing area such as an automobile engine and a transmission low in processing accuracy as compared with the turbocharger or the like.

The present invention has been accomplished with this respect in view, and it is an object of the present invention to provide a sealing device capable of reliably preventing the leakage of a sealed fluid over a long period and over a wider range of from a lower speed to a higher speed without narrowing of a seal gap.

### MEANS FOR SOLUTION OF THE SUBJECT

To achieve the above object, according to Claim 1 in "WHAT IS CLAIMED IS" of the present invention, there is provided a sealing device in which a seal gap is provided between a rotor and a stator, so that the leakage of a sealed fluid can be prevented in a non-contact manner under the rotation of the rotor, characterized in that a movable floating ring is mounted in the seal gap and formed so that if its thickness is defined as 1, its length in a widthwise direction perpendicular to a thickness-wise direction is defined as equal to or larger than 3.

According to Claim 2 of the present invention, a sealing device according to Claim 1 has a feature in that the floating ring is formed of one type of a resin or a plurality of type of resins selected from thermoplastic resins and thermosetting resins.

According to Claim 3 of the present invention, a sealing device according to Claim 1 or 2 has a feature in that the floating ring is formed of a fluorine resin.

According to Claim 4 of the present invention, a sealing device according to any of Claims 1 to 3 has a feature in that the floating ring has an annular notch provided therein to extend toward a rotating center in a direction perpendicular to the thickness-wise direction.

According to Claim 5 of the present invention, a sealing device according to any of Claims 1 to 4 has a feature in that the floating ring has an concavoconvex pattern provided on its surface.

According to Claim 6 of the present invention, a sealing device according to any of Claims 1 to 5 has a feature in that each of the seal gap and the floating ring is formed into a cylindrical shape with different diameters at axially opposite ends.

According to Claim 7 of the present invention, a sealing device according to any of Claims 1 to 6 has a feature in that the rotor is provided with a sealing member for preventing the leakage of the sealed fluid from the seal gap at least during stoppage of the rotation of the rotor.

### EFFECT OF THE INVENTION

The sealing device according to the present invention provides an extremely excellent effect that the leakage of the sealed fluid can be prevented reliably over a longer period and over a wider range of a lower speed to a higher speed without narrowing of the seal gap.

### BRIEF DESCRIPTION OF THE DRAWINGS

Fig.1 is a sectional view showing essential portions of a first embodiment of a sealing device according to the present invention.
Fig.2 is a sectional view showing the arrangement of the sealing device used in a performance evaluation test.
Fig.3 is a view similar to Fig.1, showing essential portions of a second embodiment of a sealing device according to the present invention.
Fig.4 is a view similar to Fig.1, showing essential portions of a third embodiment of a sealing device according to the present invention.
Fig.5 is a view similar to Fig.1, showing essential portions of a fourth embodiment of a sealing device according to the present invention.

### BEST MODE FOR CARRYING OUT THE INVENTION

Embodiments of the present invention shown in figures will now be described.

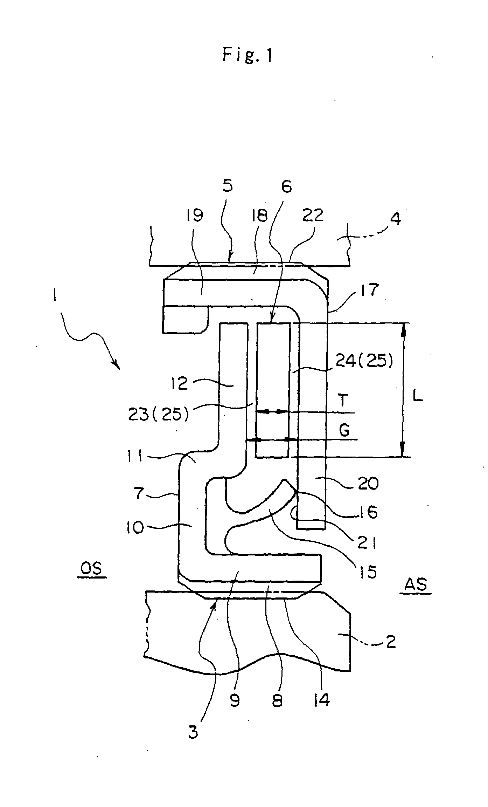

Fig.1 is a semi-sectional view showing essential portions of a first embodiment of a sealing device according to the present invention.

The sealing device of this embodiment is illustrated as being used for sealing a lubricating oil in an engine of an automobile.

As shown in Fig.1, the sealing device 1 of this embodiment includes a rotating member 3 mounted to a rotating shaft 2 as a rotor, a stationary member 5 mounted to a housing 4 as a stator, so that it is opposed to the rotating member 3, and a floating ring 6. In the sealing device 1, a left side in Fig.1 is a sealed side OS where a sealed fluid, e.g., a lubricating oil is present, and a right side in Fig.1 is an atmospheric side AS.

The rotating member 3 is integrally formed on an annular ring 7 formed for the rotating member from a metal or a resin, with an elastic seal 8 formed of a rubber-like elastomer being bonded to the rotating member.

The annular ring 7 for the rotating member includes an inner cylindrical portion 9. The inner cylindrical portion 9 is formed at a diameter slightly larger than that of the rotating shaft 2, so that a length in an axial direction shown laterally in Fig.1 assumes a predetermined value smaller than a length of the rotating shaft 2. The inner cylindrical portion 9 is formed, at its left end edge located on the sealed side, with an inner upstanding wall 10 having an annular side face and folded substantially at a right angle diametrically outwards to extend toward an inner peripheral surface of the housing 4. An outer peripheral edge of the inner upstanding wall 10 is formed to lie substantially halfway between an outer peripheral surface of the rotating shaft 2 and an inner peripheral surface of the housing 4. The inner upstanding wall 10 is formed, at its outer peripheral edge, with an intermediate cylindrical portion 11 folded substantially at a right angle toward the atmospheric side to extend axially. The intermediate cylindrical portion 11 has a length smaller than that of the inner cylindrical portion 9, and is formed, at its right end edge, with a rotating seal gap-defining wall 12 having a substantially annular side face and folded substantially at a right angle diametrically outwards to extend toward the inner peripheral surface of the housing 4.

The elastic seal 8 for the rotating member includes a rotating shaft-mounted portion 14, and a lip seal portion 15 serving as a sealing portion for preventing the leakage of the sealed fluid from a seal gap 25 which will be described hereinafter at least during stoppage of the rotation of the rotating shaft 2.

The rotating shaft-mounted portion 14 which is one of the portions of the elastic seal 8 is disposed on the inner peripheral surface of the inner cylindrical portion 9 of the annular ring 7 for the rotating member and has an appropriate interference for the rotating shaft 2.

The lip seal portion 15 which is the other portion of the elastic seal 8 has a base end disposed on that side face of the inner upstanding wall 10 of the annular ring 7 for the rotating member, which is located on the atmospheric side AS, and a leading lip end 16 disposed on the atmospheric side AS. The lip seal portion 15 is formed so that its diameter is gradually increased from the side face of the inner upstanding wall 10 on the atmospheric side AS toward the atmospheric side AS. In addition, the lip seal portion 15 is formed so that when the rotation of the rotating shaft 2 is stopped, the leading lip end 16 is brought, with an appropriate interference, into resilient contact with a seal-abutment face 21 (which will be described hereinafter) of the stationary member 5, as shown in Fig.1, and during the rotation of the rotating shaft 2, the leading lip end 16 is spaced apart from the seal-abutment face 21 by the action of a centrifugal force generated with the rotation of the rotating shaft 2.

That is, the leading lip end 16 of the lip seal portion 15 is formed so that it can be brought into and out of contact with the seal-abutment face 21.

It should be noted that the lip seal portion 15 may be provided as required depending on the design concept.

The stationary member 5 is integrally formed on an annular ring 17 formed for the stationary member from a metal or a resin, with an elastic seal 18 formed of a rubber-like elastomer being bonded to the rotating member.

The annular ring 17 for the stationary member is formed into a substantially L-shape in section and includes a horizontal cylindrical portion 19 parallel in an axial direction with its outer peripheral surface opposed to the inner peripheral surface of the housing 4, and an inward-facing flange-shaped stationary seal gap-defining wall 20 folded substantially at a right angle from a right end edge of the horizontal cylindrical portion 19 located on the atmospheric side AS toward the diametrical center. An inner peripheral surface of the horizontal cylindrical portion 19 is disposed so that it is opposed at an appropriate distance to an outer peripheral surface of an outer cylindrical portion 13 of the annular ring 7 for the rotating member in a mounted state. Further, a side face of the stationary seal gap-defining wall 20 on the sealed side OS is disposed so that it is opposed at a predetermined distance to a side face of the rotating seal gap-defining wall 12 on the atmospheric side AS. That is, the stationary seal gap-defining wall 20 and the rotating seal gap-defining wall 12 are disposed substantially in parallel to each other. A portion of the side face of the stationary seal gap-defining wall 20 in the vicinity of its inner periphery on the sealed side OS is a seal-abutment face 21 against which the leading lip end 16 of the lip seal portion 15 is in abutment during stoppage of the rotating shaft 2.

The elastic seal 18 for the stationary member is formed to cover the outer periphery of the horizontal cylindrical portion 19 of the annular ring 17 for the stationary member. A portion covering the outer periphery of the horizontal cylindrical portion 19 is a housing-mounted portion 22 having an appropriate interference for the inner peripheral surface of the housing 4.

It should be noted that the stationary seal gap-defining wall 20 may be integrally formed at a portion of the housing 4 as the stator.

The floating ring 6 is disposed between the rotating seal gap-defining wall 12 and the stationary seal gap-defining wall 20. The floating ring 6 is formed so that if the axial thickness T is defined as 1, the length L in the widthwise direction perpendicular to the thickness-wise direction is defined as equal to or larger than 3. In the relationship between the thickness T and the length L, if the length L is smaller than 3, the sealed fluid tends to be leaked, as described in detail hereinafter.

The floating ring 6 may be formed of one type of a resin or a plurality of types of resins selected from thermoplastic resins and thermosetting resins. In the present embodiment, a fluorine resin is employed alone.

Illustrative of the thermoplastic resins are, in addition to the fluorine resin, a polyether ether ketone (PEEK), a polyimide (PI), a polyphenylene sulfide (PPS), a polyamide (PA), polyamide-imide (PAI), a polyether imide (PEI), a polyacetal, a polyester and the like.

Illustrative of the thermosetting resins are a phenolic resin, an epoxy resin, an unsaturated polyester resin and the like.

The fluorine resins include a polytetrafluoroethylene (PTFE), a tetrafluoroethylene-hexafluoropropylene copolymer (FEP), a tetrafluoroethylene-perfluoroalkylvinylether copolymer (PFA), a tetrafluoroethylene-ethylene copolymer (ETFE), a polychlorotrifluoroethylene (PCTFE) and the like.

A plurality of resins may be used in combination. Further, any of various compounding ingredients such as fillers, pigments and the like may be added to the resin, if required, depending on the design concept.

The floating ring 6 may be formed in a multilayer structure in which a plurality of types of resins are laminated axially one on another.

The floating ring 6 is disposed movably in diametrical and axial directions between the rotating seal gap-defining wall 12 and the stationary seal gap-defining wall 20.

In other wards, a distance G between the rotating seal gap-defining wall 12 and the stationary seal gap-defining wall 20 is formed larger than the axial thickness T of the floating ring 6. A seal gap 25 is formed by both of a clearance 23 between opposed surfaces of the rotating seal gap-defining wall 12 and the floating ring 6 and a clearance 24 between opposed surfaces of the stationary seal gap-defining wall 20 and the floating ring 6.

Therefore, a value resulting from the addition of the size of the clearance 23 between the opposed surfaces of the rotating seal gap-defining wall 12 and the floating ring 6 and the size of the clearance 24 between opposed surfaces of the stationary seal gap-defining wall 20 and the floating ring 6, in other words, a value resulting from the subtraction of the thickness T of the floating ring 6 from the distance G between the rotating seal gap-defining wall 12 and the stationary seal gap-defining wall 20 is equal to the size of the seal gap 25.

It is preferable that the sizes of the inside and outside diameters of the floating ring 6 are values such that the floating ring 6 is not in contact with the lip seal portion 15 in the stopped state in which the rotating shaft 2 is at stoppage and in the rotated state in which the rotating shaft 2 is being rotated.

The operation of this embodiment having the above-described arrangement will be described below.

With the sealing device 1 of this embodiment, during stoppage of the rotation of the rotating shaft 2 and during the rotation of the rotating shaft 2 at a lower speed, the leading lip end 16 of the lip seal portion 15 is in resilient contact with the seal-abutment face 21 of the stationary member 5 under the action of its own resilient restoring force. Therefore, it is possible to reliably and easily prevent the leakage of the sealed fluid from the sealed side OS to the atmospheric side AS.

When the rotation of the rotating shaft 2 is started, the leading lip end 16 of the lip seal portion 15 is resiliently deformed diametrically outwards with the acceleration of the rotation by the centrifugal force generated with the rotation of the rotating shaft 2. This resilient deformation causes the leading lip end 16 of the lip seal portion 15 to be widened and spaced apart from the seal-abutment face 21. As a result, the leading lip end 16 of the lip seal portion 15 and the seal-abutment face 21 can be maintained in their non-contact states during the rotation of the rotating shaft 2.

It should be noted that the leading lip end 16 of the lip seal portion 15 spaced apart from the seal-abutment face 21 under the action of the centrifugal force generated with the rotation of the rotating shaft 2 is easily restored to its original state in which it is in abutment against the seal-abutment face 21 by its own resilient restoring force, when the rotation of the rotating shaft 2 is slowed down or stopped.

Therefore, with the sealing device 1 of the present embodiment, it is possible to reliably and easily prevent the leakage of the sealed fluid during the rotation of the rotating shaft 2 at a lower speed and during stoppage of the rotation of the rotating shaft 2.

In addition, with the sealing device 1 of the present embodiment, when the rotation of the rotating shaft 2 is started, the lubricating oil as the sealed fluid in contact with the rotating member 3 is moved toward the inner peripheral surface of the stationary member 5 with the acceleration of the rotation by the centrifugal force generated with the rotation of the rotating member 3 mounted to the rotating shaft 2, but a portion of the lubricating oil moved is intended to flow from the sealed side OS through the seal gap 25 toward the atmospheric side AS, because the centrifugal force does not act on the stationary member 5.

However, the lubricating oil intended to flow through the seal gap 25 toward the atmospheric side AS is caught and inhibited from flowing toward the atmospheric side AS by the floating ring 6 having the length L in the widthwise direction perpendicular to the thickness-wise direction, which is defined as equal to or larger than 3 defined if the thickness T of the floating ring 6 disposed in the seal gap 25 is defined as 1. Thus, the leakage of the lubricating oil toward the atmospheric side AS is prevented.

At this time, the floating ring 6, because it is movably disposed in the seal gap 25, is rotated at a speed lower than a rotating speed of the rotating shaft 2 due to the contact with the lubricating oil, and is moved to an optimal position ensuring that the pressure of the lubricating oil present in the clearance between the opposed surfaces of the rotating seal gap-defining wall 12 and the floating ring 6 is balanced with the pressure of the lubricating oil present in the clearance 24 between the opposed surfaces of the stationary seal gap-defining wall 20 and the floating ring 6. Thus, the floating ring 6 is retained coaxially with the rotating shaft 2 and automatically aligned so that the clearances 23 and 24 formed on the left and right of the floating ring 6 are retained.

With the sealing device 1 of the present embodiment, as described above, the floating ring 6 having the length L in the widthwise direction perpendicular to the thickness-wise direction, which is defined as equal to or larger than 3 defined if the thickness T is defined as 1, is disposed between the rotating seal gap-defining wall 12 and the stationary seal gap-defining wall 20. Therefore, it is possible to reliably and easily prevent the leakage of the lubricating oil toward the atmospheric side AS in the non-contact state over a wide range of from a lower speed to a higher speed without reduction in size of the seal gap 25.

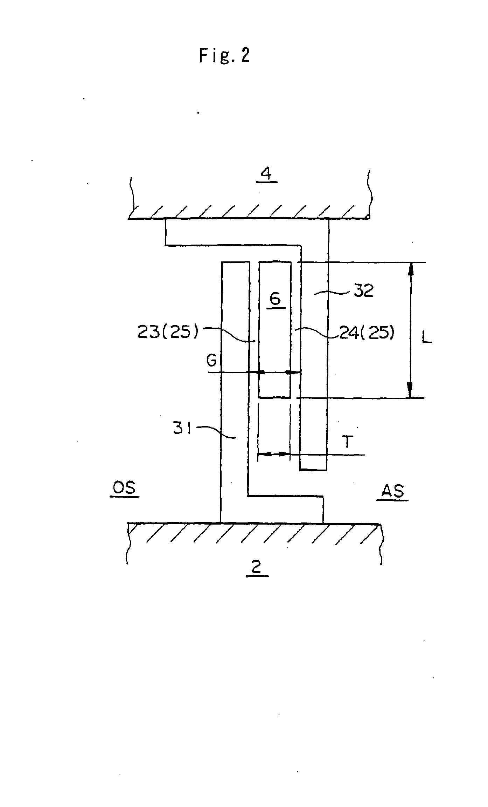

This could be confirmed by a performance evaluation test. The performance evaluation test was carried out using devices according to the present invention and conventional devices. In the device according to the present invention used in this test comprises, as shown in Fig.2, a rotating vertical wall 31 made of a metal and vertical to an axial direction is provided in the form of an annular ring of a substantially L-shape in section on an outer peripheral surface of a rotating shaft having an outside diameter of 80 mm in place of the rotating member 3; a stationary vertical wall 32 made of a transparent resin and vertical to the axial direction is provided in the form of an annular ring of a substantially L-shape in section on an inner peripheral surface of a housing 4 having an inside diameter of 100 mm in place of the stationary member 5, and which can be observed from the atmospheric side AS; a floating ring 6 is disposed between the rotating vertical wall 31 and the stationary vertical wall 32; and a seal gap 25 of 0.5 mm (which is a value resulting from the subtraction of the thickness T of the floating ring 6 from a distance G between the rotating vertical wall 31 and the stationary vertical wall 32) is also provided between the rotating vertical wall 31 and the stationary vertical wall 32. In the conventional device used in the test, a seal gap 25 of 0.5 mm is merely provided, without disposition of a flowing ring 6, between a rotating vertical wall 31 and a stationary vertical wall 32. The devices according to the present invention used in the test are of three types in which the ratios of the thickness T to the widthwise length L of the floating ring 6 are 1:3, 1:4.5 and 1:9, respectively, and the comparative devices used in the test are of three types in which the ratios of the thickness T to the widthwise length L of the floating ring 6 are 1:2.5, 1:1.75 and 1:1.4, respectively.

A lubricating oil leakage test was tested using Castle SL 5W-20 (a trade name made by Toyota, Co.) as a lubricating oil under conditions: the temperature of the lubricating oil equal to 150°C; the rotating speeds equal to 750, 1000, 2000, 3000, 4000, 5000, 6000, 7000 and 8000 rpm of the rotating shaft 2; and the sizes of seal gap 25 equal to 0.1, 0.2, 0.3, 0.4 and 0.5 mm.

The lubricating oil was supplied to the sealed side OS in a state in which the rotating shaft 2 was being rotated, and whether or not the lubricating oil was leaked toward the atmospheric side after lapse of 24 hours from the time point of the supplying of the lubricating oil to the sealed side OS was visually observed.

The results of the performance evaluation test will be described below.

It was made clear that the device according to the present invention has a good sealing performance in the sense that the lubricating oil was not leaked in the entire range of the rotating speeds (750 to 8000 rpm), even when the size of the seal gap 25 was of 0.5 mm.

On the contrary, in the conventional device, when the rotating speed of the rotating shaft 2 exceeds 4000 rpm, even if the size of the seal gap 25 is of 0.1 mm which is a smallest value, the leakage of the lubricating oil occurs. When the size of the seal gap 25 is increased, the rotating speed of the rotating shaft, at which the leakage of the lubricating oil occurs, is lowered, and when the size of the seal gap is of 0.5 mm, the leakage of the lubricating oil occurs even at the rotating speed of the rotating shaft 2 equal to 750 rpm.

It was also made clear in the performance evaluation test that in the state free from the leakage of the lubricating oil, an oil surface which is a boundary area between the lubricating oil and the atmosphere is retained annularly in the seal gap 25 and rotated in the form of a stable flow (a laminar flow) along a rotating axis. It was also made clear that a state in which the lubricating oil is being leaked is generated by the fact that the oil surface is disturbed (into a turbulent flow) so that it is waved, and a portion of the oil surface is peeled off and scattered to the atmospheric side AS.

In other words, as the speed of the rotation is increased, the flow of the lubricating oil is changed from the laminar flow to the turbulent flow and hence, the oil surface is liable to be peeled off from the surfaces of the floating ring 6 and the rotating seal gap-defining wall 12, resulting in the generation of a phenomenon that a lubricating layer incapable of transmitting the centrifugal force is produced. This phenomenon is liable to be generated around the outer peripheries of the floating ring 6 and the rotating seal gap-defining wall 12 from a difference between circumferential speeds.

Further, it was made clear in the performance evaluation test that the leakage of the lubricating oil is associated with the thickness T and the length L of the floating ring 6.

More specifically, in the range of the performance evaluation test, when the length of the floating ring 6 in the widthwise direction perpendicular to the thickness-wise direction is equal to or larger than 3 if the thickness of the floating ring 6 is defined as 1, irrespective of the seal gap 25, as in the device according to the present invention, the leakage of the lubricating oil can be prevented. On the contrary, when the length of the floating ring 6 in the widthwise direction perpendicular to the thickness-wise direction is smaller than 3 if the thickness of the floating ring 6 is defined as 1, as in the comparative device, the leakage of the lubricating oil occurs.

This could be also confirmed from the fact that as a result of the observation of the flow of the lubricating oil from the atmospheric side AS in the performance evaluation test, when the thickness T of the floating ring 6 is equal to 1/2 of the length L, the flow of the lubricating oil in contact with the surface of the floating ring 6 is disturbed into a turbulent flow, whereby the lubricating oil is leaked, and when the thickness T of the floating ring 6 is equal to 1/3 of the length L, the flow of the lubricating oil is not disturbed even if the rotating shaft 2 is rotated at the higher speed of 8000 rpm, and hence, the leakage of the lubricating oil can be prevented.

The reason why such leakage of the lubricating oil is associated with the thickness T and the length L of the floating ring 6 is considered to be that the centrifugal force is applied to the lubricating oil in contact with the floating ring 6 by the end face of the floating ring 6 to move the lubricating oil diametrically outwards along the end face of the floating ring 6, but when the thickness T is larger, the viscosity resistance of the lubricating oil between the floating ring 6 and the stationary member 5 is increased to cause the disturbance of the rotation of the floating ring 6, whereby the flow of the lubricating oil is disturbed. On the contrary, when the length L of the floating ring 6 is sufficiently large as compared with the thickness T, the viscosity resistance of the lubricating oil between the floating ring 6 and the stationary member 5 is smaller and hence, the floating ring 6 is rotated stably, whereby the turbulent flow can be prevented.

It was also ascertained by the performance evaluation test that when any of PTFE, PTFE filled with glass, PEEK, PI, PPS and a phenolic resin is used as a material for the floating ring 6, there is no leakage of the lubricating oil in the entire range of rotating speeds (of 750 to 8000 rpm) even when the size of the seal gap 25 is of 0.5 mm, leading to a good sealing performance.

On the contrary, it was ascertained that when aluminum is used as a material for the floating ring, the leakage of the lubricating oil occurs at 4000 rpm, and when iron is used as a material for the floating ring, the leakage of the lubricating oil occurs at 750 rpm.

A theory that the material for the floating ring 6 in this embodiment provides a good sealing function for preventing the leakage of the lubricating oil is not definite, but is considered to be that as compared with the metal material used in the performance evaluation, the resinous material has a smaller weight (a lower specific gravity) ensuring that it is easy to provide a rotating force in virtue of the viscosity of the lubricating oil, and a pliability (a lower elasticity modulus) ensuring that it is easy for the floating ring 6 to follow the movement of the lubricating oil. From this, it is considered that a foam metal can be used as a material for the floating ring 6.

A sealing device 1 according to this embodiment was produced, and this device as an actual product was subjected to a performance test. As a result, it could be confirmed that this sealing device 1 had a good sealing performance without the oil leakage in the entire range of rotating speeds (of 0 to 8000 rpm).

Therefore, with the sealing device 1 according this embodiment, the seal gap 25 can be set to be wider, as compared with the conventional sealing device and hence, it is possible to reliably and easily prevent the leakage of the sealed fluid over a longer period and over a wider range of from a lower speed to a higher speed without reducing the size of the seal gap 25.

In addition, with the sealing device 1 according this embodiment, the prevention of the leakage of the lubricating oil during the rotation can be achieved in a non-contact manner. Therefore, it is possible to decrease the loss of a rotational torque of the rotating shaft, and to maintain the stable sealing function over a longer period, because of a less variation with time.

Further, with the sealing device 1 according this embodiment, it is possible to moderate the tolerance at the production of the sealing device 1 and the accuracy of mounting of the sealing device 1, because the seal gap 25 can be set to be wider, and moreover, it is possible to easily provide an increase in productivity and a reduction in cost, because the axial chattering of the rotating shaft 2 can be absorbed.

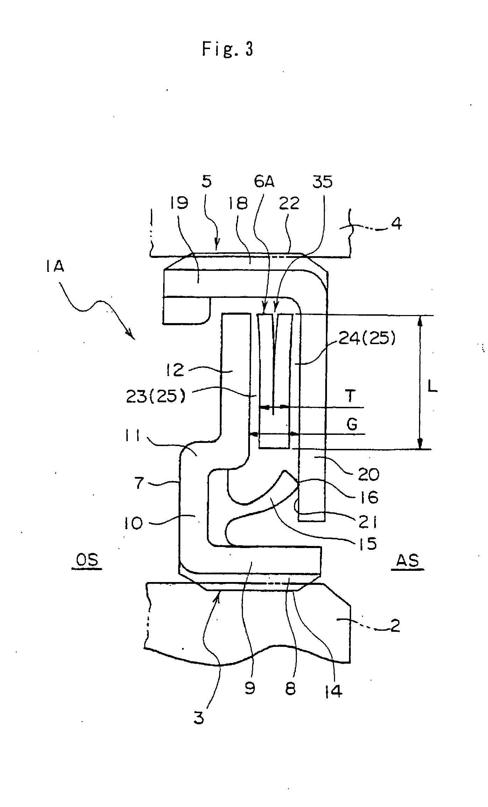

Fig.3 shows a second embodiment of a sealing device according to the present invention.

The sealing device 1A of this embodiment is designed so that the generation of a turbulent flow of a lubricating oil can be suppressed.

More specifically, in the sealing device 1A of this embodiment, an annular notch 35 is provided in a floating ring 6A to extend toward a rotational center in a direction perpendicular to a thickness-wise direction. The notch 35 in the present embodiment is formed in an axially thickness-wise central portion of an outer peripheral surface of the floating ring 6A, and has a depth as large as 70 % of a length L.

It should be noted that the depth, position and number of the notch 35 may be changed depending on the outside diameter, inside diameter and thickness T of the floating ring 6A, and the length L of the floating ring 6A in a widthwise direction perpendicular to the thickness-wise direction.

Fig.3 exaggeratedly shows the notch 35 in an opened state.

The arrangement of other components is similar to that in the sealing device 1 of the first embodiment and hence, the detailed description of them is omitted.

With such arrangement, the sealing device 1A of this embodiment is capable of providing an effect similar to that in the sealing device 1 of the first embodiment, and more reliably preventing a portion of the lubricating oil from being peeled off from a surface of the floating ring 6A during the rotation of the floating ring 6A at a higher speed. Therefore, the size of a seal gap 25 can be formed at a larger size.

This could be confirmed by a performance evaluation test similar to that in the first embodiment.

The results of the performance evaluation test for the sealing device 1 A of the present embodiment will be described below. In a range of rotating speeds of a rotating shaft 2 up to 4000 rpm, it can be observed that both of the floating ring 6A and the flow of the lubricating oil in contact with the surface of the floating ring 6A are rotated stably. It can be observed that when the disturbance is gradually generated in the flow of the lubricating oil with a further increase in rotating speed, the notch 35 provided in the floating ring 6A is started to be opened. Further, it can be observed that when the flow of the lubricating oil in contact with the floating ring 6A is largely disturbed into a turbulent flow due to a yet further increase in rotating speed, the notch 35 in the floating ring 6A is opened or closed depending on the disturbance of the flow, thereby preventing a portion of the lubricating oil from being peeled off from the surface of the floating ring 6A during the rotation of the latter. This observation can be conducted more clearly under emission of light from a stroboscope.

Namely, by providing the annular notch 35 in the floating ring 6A to extend toward the rotational center in the direction perpendicular to the thickness-wise direction, the floating ring 6A can be rotated to follow a difference between the behaviors (a difference between flow speeds) of the rotating portion and the stationary portion of the lubricating oil in contact with the floating ring 6A. Thus, it is possible to suppress the generation of a turbulent flow on the surface of the floating ring 6A or to more increase the rotating speed generated by the turbulent flow. Therefore, even if the size of the seal gap 25 is increased, it is possible to more reliably prevent a portion of the lubricating oil from being peeled off from the surface of the floating ring 6A and leaked toward the atmospheric side AS during the rotation of the floating ring 6A at a higher speed.

A sealing device 1A according to this embodiment was produced, and this device as an actual product was subjected to a performance test. As a result, it could be confirmed that this sealing device 1A had a good sealing performance without the oil leakage in the entire range of rotating speeds (of 0 to 8000 rpm).

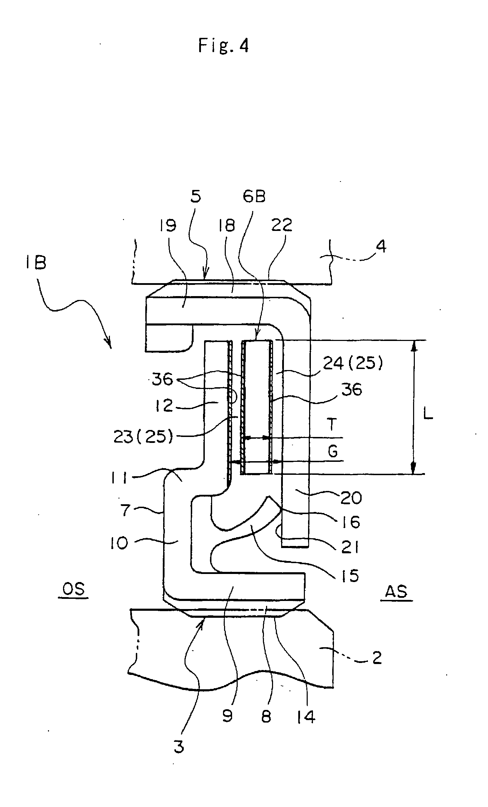

Fig.4 shows a third embodiment of a sealing device according to the present invention.

The sealing device 1 B of this embodiment is a modification constructed so that the generation of a turbulent flow of a lubricating oil can be suppressed.

More specifically, in the sealing device 1 B of this embodiment, an concavoconvex pattern 36 is provided on a surface of a floating ring 6B. The concavoconvex pattern 36 is formed at a surface roughness on the order of 10 to 15 mmRz by transferring an aventurine pattern previously formed on a surface of a cavity of a forming mold.

The concavoconvex pattern 36 can be formed using another process such as a process for mechanically processing the surface of the floating ring 6B, and a process for chemically etching the surface of the floating ring 6B.

If an convexoconcave (a pattern depth) on the concavoconvex pattern 36 is too large, a noise of agitation of the lubricating oil may be generated, or an adverse effect may be provided, in some cases. For this reason, it is essential that the size, shape and the like of the irregularity are determined depending on the size of a sealed portion, a rotating area and the like.

Further, as shown in Fig.4, the concavoconvex pattern 36 may be provided on both of the surface of the floating ring 6B and a surface of a rotating seal gap-defining wall 12 which is a rotating portion in a seal gap 25.

The construction may be such that a notch 35 similar to that in the floating ring 6A of the sealing device 1 A in the previously described second embodiment is provided in the floating ring 6B in this embodiment.

The arrangement of other components is similar to that in the sealing device 1 of the previously described first embodiment and hence, the description of them is omitted.

According to such arrangement, the sealing device 1 B of this embodiment can provide an effect similar to that in the sealing device 1 of the previously described first embodiment, and is capable of more reliably preventing a portion of the lubricating oil from being peeled off from the surface of the floating ring 6B during the rotation of the latter at a higher speed. Therefore, seal gap 25 can be formed at a larger size.

In other words, the concavoconvex pattern portion 36 provided on the surface of the floating ring 6B can be formed so that the area of contact between the floating ring 6B and the lubricating oil can be easily increased. Therefore, it is possible to suppress the generation of a turbulent flow of the lubricating oil on the surface of the floating ring 6B at the rotation of the latter at a higher speed, or to further increase the rotating speed at which the turbulent flow is generated.

A sealing device 1 B according to this embodiment was produced, and this device as an actual product was subjected to a performance test. As a result, it could be confirmed that this sealing device 1 B had a good sealing performance without the oil leakage in the entire range of rotating speeds (of 0 to 8000 rpm).

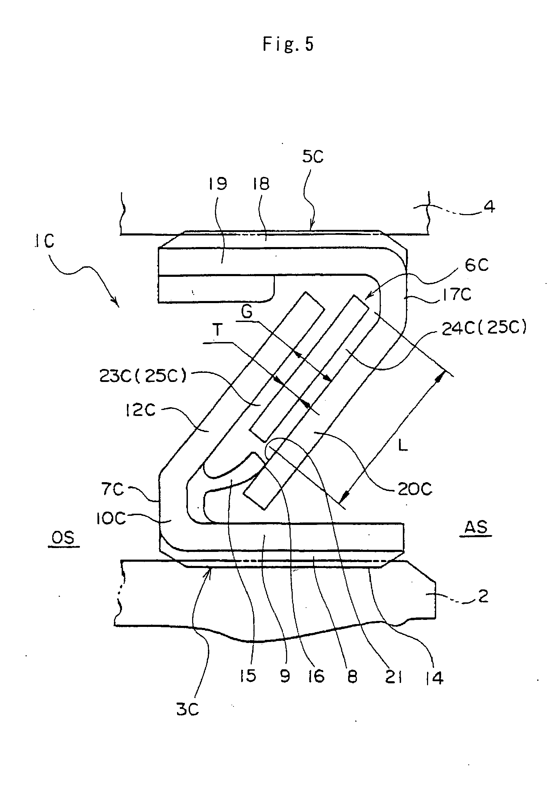

Fig.5 shows a fourth embodiment of a sealing device according to the present invention.

The sealing device 1C of this embodiment is constructed so that each of a seal gap 25C and a floating ring 6C is formed into a cylindrical shape with different diameters at axially opposite ends.

More specifically, an annular ring 7C for a rotating member 3C of the sealing device 1C in this embodiment is formed in such a manner that a tapered ring-shaped rotating seal gap-defining wall 12C increased in diameter toward an atmospheric side AS is formed to extend to an outer peripheral edge of an inner upstanding wall 10C without provision of an intermediate cylindrical portion 11 as described in the previously described first embodiment.

The annular ring 17C for the rotating member 5C of the sealing device 1C in this embodiment is provided with a tapered ring-shaped stationary seal gap-defining wall 20C increased in diameter toward the atmospheric side AS, in place of the stationary seal gap-defining wall 20 in the previously described first embodiment. The stationary seal gap-defining wall 20C is disposed so that its outer surface opposed in parallel at a predetermined distance to an inner surface of the rotating seal gap-defining wall 12C.

A tapered ring-shaped floating ring 6C increased in diameter toward the atmospheric side AS is diametrically and axially movably disposed between the rotating seal gap-defining wall 12C and the stationary seal gap-defining wall 20C. The floating ring 6C is also formed so that if its thickness T is defined as 1, its length L in a widthwise direction perpendicular to a thickness-wise direction is defined as equal to or larger 3, as is the floating ring 6 of the sealing device 1 in the previously described first embodiment.

In other words, each of the seal gap 25C and the floating ring 6C is formed into a cylindrical shape with different diameters at axially opposite ends such that the diameter on the atmospheric side AS is larger and the diameter on the sealed side OS is smaller.

The arrangement of other components is similar to that in the previously described first embodiment and hence, the description of them is omitted.

One of both of a notch 35 similar to that in the floating ring 6A of the sealing device 1 A in the previously described second embodiment and an concavoconvex pattern similar to that in the floating ring 6B of the sealing device 1 B in the third embodiment may be provided in the floating ring 6C in this embodiment. Herein, a face of the floating ring 6C provided with the notch 35 is a larger-diameter end face of the floating ring 6C.

According to such arrangement, the sealing device 1C of this embodiment can provide an effect similar to that in the sealing device 1 of the previously described first embodiment, and has an increased degree of freedom for a range of placement thereof.

More specifically, according to the sealing device 1C of this embodiment, a centrifugal force vertical in a diametrical direction of the rotating shaft 2 can be generated on the rotating seal gap-defining wall 12C and the floating ring 6C. Therefore, it is possible to prevent the leakage of the lubricating oil toward the atmospheric side AS, and even when the distance between the rotating shaft 2 and the housing 4 is smaller, the sealing device 1C can be placed if there is a margin in the axial size.

A sealing device 1C according to this embodiment was produced, and this device as an actual product was subjected to a performance test. As a result, it could be confirmed that this sealing device 1C had a good sealing performance without the oil leakage in the entire range of rotating speeds (of 0 to 8000 rpm).

It was also made clear by the experiment that the sealing performance of the sealing device 1C of this embodiment was more excellent in the arrangement in which the portion of each of the seal gap 25C and the floating ring 6C on the atmospheric side AS is of the larger diameter and the portion on the sealed side OS is of the smaller diameter, than in the arrangement in which the portion on the atmospheric side AS is of the smaller diameter and the portion on the sealed side OS is of the larger diameter. This is considered to be due to the following reason: In the arrangement in which the portion on the atmospheric side AS is of the larger diameter and the portion on the sealed side OS is of the smaller diameter, the lubricating oil flowing so as to be repelled diametrically outwards by the centrifugal force generated with the rotation of the rotating member 3C mounted to the rotating shaft 2 is more liable to be adhered to the inner surface increased in diameter toward the atmospheric side AS, and the lubricating oil with the rotating force applied thereto always flows along the floating ring 6C.

The sealing device according to the present invention can be used for a lubricating section not only in the engine of the automobile but also in a transmission and an undercarriage.

In addition, the sealing device according to the present invention can be used for preventing the leakage of any of a variety of sealed fluids.

It will be understood that the present invention is not limited to the above-described embodiments, and various modifications may be made as required. For example, in the sealing device according to the present invention, the lip seal portion can be eliminated, and one of both of the notch and the concavoconvex pattern can be provided on the floating ring in the first embodiment.

## Claims

1. A sealing device in which a seal gap is provided between a rotor and a stator, so that the leakage of a sealed fluid can be prevented in a non-contact manner under the rotation of the rotor, **characterized in that**
a movable floating ring is mounted in said seal gap and formed so that if its thickness is defined as 1, its length in a widthwise direction perpendicular to a thickness-wise direction is defined as equal to or larger than 3.

2. A sealing device according to claim 1, **characterized in that** said floating ring is formed of one type of a resin or a plurality of type of resins selected from thermoplastic resins and thermosetting resins.

3. A sealing device according to claim 1 or 2, **characterized in that** said floating ring is formed of a fluorine resin.

4. A sealing device according to any of claims 1 to 3, **characterized in that** said floating ring has an annular notch provided therein to extend toward a rotating center in a direction perpendicular to the thickness-wise direction.

5. A sealing device according to any of claims 1 to 4, **characterized in that** said floating ring has an concavoconvex pattern provided on its surface.

6. A sealing device according to any of claims 1 to 5, **characterized in that** each of said seal gap and said floating ring is formed into a cylindrical shape with different diameters at axially opposite ends.

7. A sealing device according to any of claims 1 to 6, **characterized in that** said rotor is provided with a sealing member for preventing the leakage of the sealed fluid from said seal gap at least during stoppage of the rotation of said rotor.
